# FASCICULE DE BREVET EUROPEEN

(11) **EP 2 327 350 B1**
(45) Date de publication et mention de la délivrance du brevet: **30.05.2012**
(21) Numéro de dépôt: 10192543.6
(22) Date de dépôt: 25.11.2010
(51) Int. Cl.: A47L 15/42, A47L 15/48, D06F 39/00

(54) **Appareil de lavage ayant un réservoir comportant au moins une réserve d'un matériau à accumulation de chaleur**
Reinigungsgerät, das mit einem Behälter ausgestattet ist, der mindestens über eine Reserve eines Wärmespeichermaterials verfügt
Washing appliance with a tank comprising at least one stock of a heat-accumulation material

(30) Priorité: 27.11.2009 FR 0905731
(43) Date de publication de la demande: 01.06.2011
(73) Titulaire: FagorBrandt SAS, 92500 Rueil Malmaison (FR)
(72) Inventeur: Pont, Hervé, 71680 Vinzelles (FR); Serve, Daniel, 69003 Lyon (FR)

(56) Documents cités:
- EP-A2- 0 669 097
- EP-A2- 0 914 800
- EP-A2- 1 111 118
- WO-A1-2005/051158
- WO-A1-2007/004176
- DE-A1- 4 403 737
- JP-A- 11 113 831

## Description

La présente invention concerne d'une part un appareil de lavage pourvu d'un échangeur de chaleur permettant de récupérer, de stocker et de restituer de l'énergie calorifique d'un ou plusieurs bains de lavage et/ou de rinçage contenus dans une cuve de lavage.

Elle concerne également un procédé de commande en fonctionnement d'un appareil de lavage pourvu d'un échangeur de chaleur permettant de récupérer, de stocker et de restituer de l'énergie calorifique d'un ou plusieurs bains de lavage et/ou de rinçage contenus dans une cuve de lavage.

De manière générale, l'invention concerne les appareils de lavage, particulièrement les appareils de lavage à usage domestique, comprenant au moins une réserve de matériau à accumulation de chaleur mise en contact avec au moins un bain de lavage et/ou de rinçage.

On connaît un document EP 1 111 118 A2 qui décrit un appareil ménager véhiculant de l'eau comprenant au moins une conduite d'eaux usées pour l'arrivée des eaux usées évacuées d'une cuve de nettoyage à l'aide d'une pompe et une conduite d'eau douce pour l'arrivée de l'eau douce destinée à alimenter la cuve de nettoyage. L'appareil ménager comprend également un accumulateur de chaleur latente pour absorber l'énergie thermique dans les eaux usées, pour emmagasiner l'énergie thermique absorbée ainsi que pour fournir l'énergie thermique à l'eau douce. L'accumulateur de chaleur latente est intégré dans la conduite d'eau douce. L'accumulateur de chaleur latente est agencé de manière à produire à la fois un écoulement à courant parallèle et un écoulement à contre-courant de l'eau douce par rapport au sens d'écoulement des eaux usées afin d'obtenir une augmentation de l'énergie thermique transmissible.

Cependant, cet appareil ménager présente l'inconvénient de disposer d'une surface d'échange de chaleur limitée entre l'accumulateur de chaleur latente, la conduite des eaux usées, et la conduite d'eau douce.

Par conséquent, l'énergie thermique échangée entre les eaux usées, l'accumulateur de chaleur latente et l'eau douce n'est pas optimisée et nécessite une durée d'échange de chaleur importante.

Un tel accumulateur à chaleur latente ne permet pas d'optimiser les échanges de chaleur à cause de l'épaisseur des éléments constituant celui-ci et de la surface réduite de la paroi d'échange.

Par ailleurs, la mise en oeuvre d'un tel appareil ménager est complexe compte tenu des multiples étanchéités à réaliser au niveau des zones d'échange de chaleur entre l'accumulateur de chaleur latente et les conduites d'eaux usées et d'eau douce.

Cet appareil ménager présente également l'inconvénient que l'accumulateur à chaleur latente est constitué d'éléments ayant des formes sinueuses provoquant l'accumulation de saletés à l'intérieur de celui-ci lors de la circulation des eaux usées.

En outre, la durée d'échange de chaleur dans l'accumulateur à chaleur latente est limitée à la durée de circulation à contre-courant de l'eau douce et des eaux usées entrant et sortant dudit accumulateur de chaleur latente.

Les formes des éléments constituant l'accumulateur à chaleur latente sont complexes engendrant un coût élevé de fabrication de l'appareil ménager et des difficultés d'industrialisation.

On connaît déjà le document WO 2007/004176 A1 qui décrit un échangeur de chaleur utilisé dans une machine à laver. L'échangeur de chaleur comprend une chambre d'eau chaude recevant l'eau chaude, une chambre d'eau froide remplie d'eau froide entourant la chambre d'eau chaude et plus d'une ailette s'étendant radialement à partir de la chambre d'eau chaude jusqu'à la paroi de la chambre d'eau froide, contenant à l'intérieur le matériau à changement de phase.

L'énergie thermique de l'eau chaude circulant dans la chambre d'eau chaude est transférée à partir de la paroi de la chambre d'eau chaude jusqu'au matériau à changement de phase.

L'eau froide reçue dans la chambre d'eau froide entre en contact avec des faces de l'ailette. En conséquence, l'énergie thermique stockée dans le matériau à changement de phase contenue dans l'ailette est transférée à l'eau froide.

La machine à laver comprend une cuve de lavage dans laquelle sont placés les éléments à laver, une conduite d'évacuation d'eau chaude pour évacuer l'eau utilisée dans la cuve de lavage et une conduite d'eau froide pour l'admission d'eau froide à partir du réseau de distribution d'eau dans la cuve de lavage. L'échangeur de chaleur est connecté à la conduite d'eau froide et à la conduite d'évacuation d'eau chaude. L'orifice d'arrivée d'eau froide est connecté à la conduite d'eau froide et l'orifice de sortie d'eau froide est connecté à la cuve de lavage. Après que l'eau évacuée de la cuve soit entrée dans la chambre d'eau chaude au moyen de la conduite d'évacuation d'eau chaude, elle est évacuée de l'échangeur de chaleur, à nouveau au moyen de la conduite d'évacuation d'eau chaude.

La présente invention a pour but de résoudre les inconvénients précités et de proposer un procédé de commande en fonctionnement d'un appareil de lavage et un appareil de lavage associé permettant d'absorber l'énergie calorifique d'au moins un bain de lavage et/ou de rinçage, de stocker ladite énergie calorifique absorbée et de restituer ladite énergie calorifique stockée à au moins un bain de lavage et/ou de rinçage avec un échange de chaleur optimisé entre deux bains de lavage et/ou de rinçage pendant des phases d'échange de chaleur courtes tout en simplifiant la mise en oeuvre industrielle dudit appareil de lavage.

A cet égard, la présente invention vise, selon un premier aspect, un appareil de lavage comprenant une cuve de lavage, un échangeur de chaleur, ladite cuve de lavage contenant au moins un bain de lavage et/ou de rinçage utilisé lors d'un cycle de fonctionnement dudit appareil de lavage, ledit échangeur de chaleur comprenant au moins une réserve d'un matériau à accumulation de chaleur captant l'énergie calorifique d'au moins un premier bain de lavage et/ou de rinçage et restituant ladite énergie calorifique captée à au moins un deuxième bain de lavage et/ou de rinçage, ledit appareil de lavage comprenant un réservoir en communication fluidique avec ladite cuve de lavage, ledit réservoir comportant ladite au moins une réserve d'un matériau à accumulation de chaleur, et ladite au moins une réserve d'un matériau à accumulation de chaleur logée à l'intérieur dudit réservoir étant réalisée sous la forme d'une poche contenant un matériau à accumulation de chaleur.

Selon l'invention,
- lesdits au moins un premier et deuxième bain de liquide de lavage et/ou de rinçage sont mis en circulation successivement entre ladite cuve de lavage et ledit réservoir ; et
- lors du remplissage du réservoir logeant ladite au moins une poche contenant un matériau à accumulation de chaleur par lesdits au moins un premier et deuxième bain de liquide de lavage et/ou de rinçage, ladite au moins une poche contenant un matériau à accumulation de chaleur est entourée par lesdits au moins un premier et deuxième bain de liquide de lavage et/ou de rinçage.

Ainsi, la cuve de lavage et le réservoir comportant au moins une poche contenant un matériau à accumulation de chaleur sont couplés de manière fluidique de sorte que lesdits au moins un premier et deuxième bain de lavage et/ou de rinçage puissent circuler depuis ladite cuve de lavage vers ledit réservoir et inversement.

Le réservoir est adapté à contenir au moins en partie un bain de lavage et/ou de rinçage de sorte à créer un échangeur de chaleur entre au moins une poche dudit réservoir contenant un matériau à accumulation de chaleur et l'un desdits au moins un premier et deuxième bain de lavage et/ou de rinçage provenant de la cuve de lavage.

Le matériau à accumulation de chaleur est contenu dans une poche, hermétiquement fermée, de sorte à absorber ou à restituer l'énergie calorifique d'au moins un bain de lavage et/ou de rinçage mis en circulation entre la cuve de lavage et le réservoir contenant ladite au moins une réserve d'un matériau à accumulation de chaleur réalisée sous la forme d'une poche contenant un matériau à accumulation de chaleur.

Ladite au moins une réserve d'un matériau à accumulation de chaleur réalisée sous la forme d'une poche contenant un matériau à accumulation de chaleur est également adaptée à stocker l'énergie calorifique captée d'au moins un premier bain de lavage et/ou de rinçage avant de restituer cette énergie calorifique à au moins un deuxième bain de lavage et/ou de rinçage.

Ladite au moins une réserve d'un matériau à accumulation de chaleur réalisée sous la forme d'une poche contenant un matériau à accumulation de chaleur et placée dans un réservoir couplé de manière fluidique avec la cuve de lavage permet de maximiser la surface d'échange de chaleur entre le matériau à accumulation de chaleur et lesdits au moins un premier et deuxième bain de lavage et/ou de rinçage de sorte à optimiser les échanges thermiques.

Le réservoir comportant au moins une poche contenant un matériau à accumulation de chaleur peut ainsi recevoir successivement ledit au moins un premier bain de lavage et/ou de rinçage pour l'absorption d'énergie calorifique par le matériau à accumulation de chaleur et ledit au moins un deuxième bain de lavage et/ou de rinçage pour la récupération d'énergie calorifique absorbée par ledit matériau à accumulation de chaleur.

De cette manière, les phases d'échange de chaleur entre le matériau à accumulation de chaleur et lesdits au moins un premier et deuxième bain de lavage et/ou de rinçage sont raccourcies et d'efficacité améliorée tout en simplifiant la structure de l'appareil de lavage et l'industrialisation de celui-ci.

Lors du remplissage du réservoir logeant ladite au moins une poche contenant un matériau à accumulation de chaleur par lesdits au moins un premier et deuxième bain de liquide de lavage et/ou de rinçage, ladite au moins une poche contenant un matériau à accumulation de chaleur est entourée par lesdits au moins un premier et deuxième bain de liquide de lavage et/ou de rinçage.

Ainsi, les échanges de chaleur entre le matériau à accumulation de chaleur de ladite au moins une poche et lesdits au moins un premier et deuxième bain de liquide de lavage et/ou de rinçage sont optimisés grâce à une surface d'échange de chaleur maximale.

Ladite au moins une réserve d'un matériau à accumulation de chaleur logée à l'intérieur dudit réservoir réalisée sous la forme d'une poche contenant un matériau à accumulation de chaleur permet ainsi de vendre un appareil de lavage comprenant un réservoir en communication fluidique avec la cuve de lavage soit avec ladite poche contenant un matériau à accumulation de chaleur soit sans ladite poche contenant un matériau à accumulation de chaleur.

De cette manière, le fabricant d'appareil de lavage peut standardiser plusieurs appareils de lavage comprenant un réservoir en communication fluidique avec la cuve de lavage comportant la poche contenant un matériau à accumulation de chaleur ou non en fonction du modèle.

Ladite au moins une réserve d'un matériau à accumulation de chaleur logée à l'intérieur dudit réservoir et réalisée sous la forme d'une poche contenant un matériau à accumulation de chaleur permet de garantir une surface d'échange de chaleur optimisée entre le matériau à accumulation de chaleur et lesdits au moins un premier et deuxième bain de liquide de lavage et/ou de rinçage tout en garantissant des formes simples de ladite au moins une réserve d'un matériau à accumulation de chaleur.

De cette manière, l'encrassement du réservoir avec des saletés provenant desdits au moins un premier et deuxième bain de liquide de lavage et/ou de rinçage est empêché.

En outre, la poche contenant un matériau à accumulation de chaleur empêche de mélanger le matériau à accumulation de chaleur avec au moins un bain de lavage et/ou de rinçage.

Par ailleurs, la poche contenant un matériau à accumulation de chaleur permet de faciliter la mise en oeuvre de ladite au moins une réserve d'un matériau à accumulation de chaleur, notamment lors du stockage, de la manipulation et du positionnement de ladite poche dans le réservoir.

La poche contenant le matériau à accumulation de chaleur permet également de faciliter le recyclage de l'appareil de lavage en séparant aisément ladite poche du réservoir.

Selon un second aspect, la présente invention vise un procédé de commande en fonctionnement d'un appareil de lavage, ledit appareil de lavage comprenant une cuve de lavage, un échangeur de chaleur, ladite cuve de lavage contenant au moins un bain de lavage et/ou de rinçage utilisé lors d'un cycle de fonctionnement dudit appareil de lavage, ledit échangeur de chaleur comprenant au moins une réserve d'un matériau à accumulation de chaleur captant l'énergie calorifique d'au moins un premier bain de lavage et/ou de rinçage et restituant ladite énergie calorifique captée à au moins un deuxième bain de lavage et/ou de rinçage, ledit appareil de lavage comprenant un réservoir en communication fluidique avec ladite cuve de lavage, ledit réservoir comportant ladite au moins une réserve d'un matériau à accumulation de chaleur, et ladite au moins une réserve d'un matériau à accumulation de chaleur logée à l'intérieur dudit réservoir étant réalisée sous la forme d'une poche contenant un matériau à accumulation de chaleur.

Selon l'invention, le procédé de commande en fonctionnement d'un appareil de lavage comprend au moins les étapes suivantes :
- introduction successive desdits au moins un premier et deuxième bain de lavage et/ou de rinçage depuis ladite cuve de lavage à l'intérieur d'un réservoir comportant ladite au moins une réserve d'un matériau à accumulation de chaleur,
- où, lors du remplissage du réservoir logeant ladite au moins une poche contenant un matériau à accumulation de chaleur par lesdits au moins un premier et deuxième bain de liquide de lavage et/ou de rinçage, ladite au moins une poche contenant un matériau à accumulation de chaleur est entourée par lesdits au moins un premier et deuxième bain de liquide de lavage et/ou de rinçage.

Ce procédé de commande en fonctionnement d'un appareil de lavage présente des avantages analogues à ceux décrits précédemment en référence à l'appareil de lavage selon l'invention.

En particulier, au moins un premier bain de lavage et/ou de rinçage est introduit depuis la cuve de lavage dans le réservoir comportant au moins une poche contenant un matériau à accumulation de chaleur pour récupérer l'énergie calorifique dudit au moins un premier bain de lavage et/ou de rinçage. Et au moins un deuxième bain de lavage et/ou de rinçage est introduit depuis la cuve de lavage dans le réservoir comportant au moins une poche contenant un matériau à accumulation de chaleur pour restituer l'énergie calorifique captée audit au moins un deuxième bain de lavage et/ou de rinçage.

Lesdits au moins un premier et deuxième bain de lavage et/ou de rinçage introduits dans le réservoir échangent de la chaleur avec ladite au moins une réserve d'un matériau à accumulation de chaleur logée à l'intérieur dudit réservoir et réalisée sous la forme d'une poche contenant un matériau à accumulation de chaleur de sorte que ledit matériau à accumulation de chaleur absorbe l'énergie calorifique dudit au moins un premier bain de lavage et/ou de rinçage et que ledit matériau à accumulation de chaleur restitue l'énergie calorifique captée audit au moins un deuxième bain de lavage et/ou de rinçage.

D'autres particularités et avantages de l'invention apparaîtront encore dans la description ci-après.

A l'unique dessin annexé, donné à titre d'exemple non limitatif :

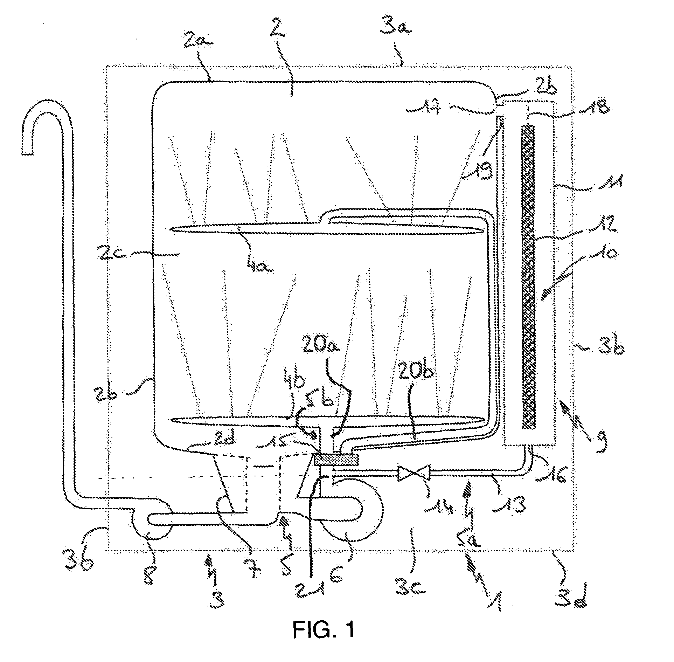

- la figure 1 est une vue schématique en coupe d'une machine à laver la vaisselle conforme à un mode de réalisation de l'invention.

On va décrire tout d'abord en référence à la figure 1 un appareil de lavage.

Cet appareil de lavage peut être une machine à laver la vaisselle à usage domestique, ou une machine à laver le linge à usage domestique, ou une machine à laver et à sécher le linge à usage domestique.

Bien entendu, la présente invention s'applique à tous les types d'appareil de lavage, et notamment à chargement frontal et à chargement par le dessus de la vaisselle ou du linge.

On va décrire, en référence à la figure 1, une machine à laver la vaisselle conforme à l'invention.

Une machine à laver la vaisselle 1 comprend une cuve de lavage 2 dont la face frontale est fermée par une porte (non représentée). La cuve de lavage 2 est entourée par une carrosserie 3 comprenant une paroi supérieure 3a, des parois latérales 3b, une paroi de fond 3c et une paroi inférieure 3d.

La porte de la cuve de lavage 2 permet d'obturer une ouverture réalisée dans la cuve de lavage 2. Cette porte de cuve de lavage 2 peut ainsi être mobile entre une position fermée dans laquelle elle obture l'ouverture, de manière étanche, et une position ouverte.

Dans un exemple de réalisation, et de manière nullement limitative, la porte de cuve de lavage 2 est montée pivotante autour d'un axe de rotation solidaire de la carrosserie 3 de la machine à laver la vaisselle 1.

La cuve de lavage 2 comprend au moins un moyen de pulvérisation d'eau 4a, 4b d'un bain de lavage et/ou de rinçage sur les pièces de vaisselle.

Ici et de manière nullement limitative, la cuve de lavage 2 comprend un moulinet d'aspersion d'eau supérieur 4a et un moulinet d'aspersion inférieur 4b.

Une eau d'un bain de lavage et/ou de rinçage est définie comme de l'eau permettant le nettoyage de la vaisselle et circulant dans un circuit hydraulique 5 d'une machine à laver la vaisselle 1. L'origine de l'eau d'un bain de lavage et/ou de rinçage est une eau arrivant du réseau d'alimentation de la machine à laver la vaisselle 1.

La cuve de lavage 2 comprend une paroi supérieure 2a, des parois latérales 2b, une paroi de fond 2c et une paroi inférieure 2d.

La carrosserie 3 de la machine à laver la vaisselle 1 est adaptée à loger la cuve de lavage 2. Ladite cuve de lavage 2 est adaptée à contenir notamment l'eau des bains de lavage et/ou de rinçage des différentes phases d'un cycle de nettoyage.

Au moins un panier à vaisselle (non représenté) est monté à l'intérieur de la cuve de lavage 2.

En particulier, un panier à vaisselle peut être situé dans la partie supérieure de la cuve de lavage 2 et désigné par panier supérieur, et un panier à vaisselle peut être situé dans la partie inférieure de la cuve de lavage 2 et désigné par panier inférieur.

Les paniers à vaisselle peuvent être poussés et retirés en les faisant glisser à l'intérieur de la cuve de lavage 2 de la machine à laver la vaisselle 1 soit après la fin d'un cycle de nettoyage pour le déchargement de la vaisselle soit avant le début d'un cycle de nettoyage pour le chargement de la vaisselle.

Cette machine à laver la vaisselle 1 est munie d'une pompe 6 pour la circulation d'eau d'un bain de lavage et/ou de rinçage dans la cuve de lavage 2.

Dans un exemple de réalisation, et de manière nullement limitative, la machine à laver la vaisselle 1 fonctionne de telle sorte à minimiser le bain de lavage et/ou de rinçage retenu dans un puisard 7 ménagé dans la paroi inférieure 2d de la cuve de lavage 2.

La pompe de circulation d'eau 6 puise l'eau du bain de lavage et/ou de rinçage dans le puisard 7 pour mettre en circulation l'eau du bain de lavage et/ou de rinçage sous pression jusqu'aux moyens de pulvérisation 4a, 4b. Ensuite, le bain de lavage et/ou de rinçage retourne dans le puisard 7.

Cette pompe de circulation d'eau 6 est entraînée par un moteur électrique.

La machine à laver la vaisselle 1 peut également comprendre une pompe de vidange 8 de l'eau usée du bain de lavage et/ou de rinçage.

La pompe de vidange 8 puise l'eau usée du bain de lavage et/ou de rinçage dans le puisard 7 pour évacuer l'eau usée du bain de lavage et/ou de rinçage dans un réseau d'eau usée connecté à la machine à laver la vaisselle 1.

Cette pompe de vidange 8 est entraînée par un moteur électrique.

La machine à laver la vaisselle 1 comprend des moyens de commande (non représentés), et notamment au moins un microcontrôleur, permettant de dérouler des programmes de nettoyage prédéterminés.

On va à présent décrire, en référence à la figure 1, un échangeur de chaleur comprenant au moins une réserve d'un matériau à accumulation de chaleur d'un appareil de lavage, et en particulier d'une machine à laver la vaisselle, conforme à l'invention.

La machine à laver la vaisselle 1 comprend un échangeur de chaleur 9.

La cuve de lavage 2 contient au moins un bain de lavage et/ou de rinçage utilisé lors d'un cycle de fonctionnement de la machine à laver la vaisselle 1.

L'échangeur de chaleur 9 comprend au moins une réserve d'un matériau à accumulation de chaleur 10 captant l'énergie calorifique d'au moins un premier bain de lavage et/ou de rinçage et restituant ladite énergie calorifique captée à au moins un deuxième bain de lavage et/ou de rinçage.

La machine à laver la vaisselle 1 comprend un réservoir 11 en communication fluidique avec la cuve de lavage 2.

Où lesdits au moins un premier et deuxième bain de liquide de lavage et/ou de rinçage sont mis en circulation successivement entre la cuve de lavage 2 et le réservoir 11.

Le réservoir 11 comporte ladite au moins une réserve d'un matériau à accumulation de chaleur 10.

Et, ladite au moins une réserve d'un matériau à accumulation de chaleur 10 logée à l'intérieur du réservoir 11 est réalisée sous la forme d'une poche 12 contenant un matériau à accumulation de chaleur.

Ainsi, la cuve de lavage 2 et le réservoir 11 comportant au moins une poche 12 contenant un matériau à accumulation de chaleur sont couplés de manière fluidique de sorte que lesdits au moins un premier et deuxième bain de lavage et/ou de rinçage puissent circuler depuis ladite cuve de lavage 2 vers ledit réservoir 11 et inversement.

Le réservoir 11 est adapté à contenir au moins en partie un bain de lavage et/ou de rinçage de sorte à créer un échangeur de chaleur 9 entre au moins une poche 12 dudit réservoir 11 contenant un matériau à accumulation de chaleur et l'un desdits au moins un premier et deuxième bain de lavage et/ou de rinçage provenant de la cuve de lavage 2.

Le matériau à accumulation de chaleur est contenu dans une poche 12, hermétiquement fermée, de sorte à absorber ou à restituer l'énergie calorifique d'au moins un bain de lavage et/ou de rinçage mis en circulation entre la cuve de lavage 2 et le réservoir 11 contenant ladite au moins une réserve d'un matériau à accumulation de chaleur 10 réalisée sous la forme d'une poche 12 contenant un matériau à accumulation de chaleur.

Ladite au moins une réserve d'un matériau à accumulation de chaleur 10 réalisée sous la forme d'une poche 12 contenant un matériau à accumulation de chaleur est également adaptée à stocker l'énergie calorifique captée d'au moins un premier bain de lavage et/ou de rinçage avant de restituer cette énergie calorifique à au moins un deuxième bain de lavage et/ou de rinçage.

Ladite au moins une réserve d'un matériau à accumulation de chaleur 10 réalisée sous la forme d'une poche 12 contenant un matériau à accumulation de chaleur et placée dans un réservoir 11 couplé de manière fluidique avec la cuve de lavage 2 permet de maximiser la surface d'échange de chaleur entre le matériau à accumulation de chaleur et lesdits au moins un premier et deuxième bain de lavage et/ou de rinçage de sorte à optimiser les échanges thermiques.

Le réservoir 11 comportant au moins une poche 12 contenant un matériau à accumulation de chaleur peut ainsi recevoir successivement ledit au moins un premier bain de lavage et/ou de rinçage pour l'absorption d'énergie calorifique par le matériau à accumulation de chaleur et ledit au moins un deuxième bain de lavage et/ou de rinçage pour la récupération d'énergie calorifique absorbée par ledit matériau à accumulation de chaleur.

De cette manière, les phases d'échange de chaleur entre le matériau à accumulation de chaleur et lesdits au moins un premier et deuxième bain de lavage et/ou de rinçage sont raccourcies et d'efficacité améliorée tout en simplifiant la structure de la machine à laver la vaisselle 1 et l'industrialisation de celle-ci.

Lors du remplissage du réservoir 11 logeant ladite au moins une poche 12 contenant un matériau à accumulation de chaleur par lesdits au moins un premier et deuxième bain de liquide de lavage et/ou de rinçage, ladite au moins une poche 12 contenant un matériau à accumulation de chaleur est entourée par lesdits au moins un premier et deuxième bain de liquide de lavage et/ou de rinçage.

Ainsi, les échanges de chaleur entre le matériau à accumulation de chaleur de ladite au moins une poche 12 et lesdits au moins un premier et deuxième bain de liquide de lavage et/ou de rinçage sont optimisés grâce à une surface d'échange de chaleur maximale.

En outre, le matériau à accumulation de chaleur étant contenu dans une poche, la surface d'échange de chaleur entre le matériau à accumulation de chaleur et lesdits au moins un premier et deuxième bain de lavage est optimisée de sorte à améliorer les échanges thermiques et à réutiliser pour chauffer au moins un deuxième bain de lavage et/ou de rinçage un maximum d'énergie calorifique dépensée lors du chauffage d'au moins un premier bain de lavage et/ou de rinçage.

Le réservoir 11 comportant la poche 12 contenant un matériau à accumulation de chaleur peut être situé à l'intérieur de la machine à laver la vaisselle 1, et en particulier entre la cuve de lavage 2 et la carrosserie 3 de la machine à laver la vaisselle 1.

Le réservoir 11 comportant la poche 12 contenant un matériau à accumulation de chaleur peut être fixé par des moyens de fixation (non représentés) sur la carrosserie 3 de la machine à laver la vaisselle 1 ou sur la cuve de lavage 2.

La fixation du réservoir 11 met en oeuvre des moyens de fixation classiques, par exemple du type par vissage, encliquetage élastique. Ces moyens de fixations sont bien connus de l'homme du métier et n'ont pas besoin d'être décrits plus en détail ici.

Dans un mode de réalisation de l'invention, le réservoir 11 est couplé de manière fluidique à la cuve de lavage 2 au travers de la pompe de circulation d'eau 6.

Ainsi, l'eau d'au moins un bain de lavage et/ou de rinçage peut être mise en circulation depuis la cuve de lavage 2 jusqu'au réservoir 11 comportant la poche 12 contenant un matériau à accumulation de chaleur au moyen de la pompe de circulation d'eau 6.

La pompe de circulation d'eau 6 est reliée en entrée au puisard 7 de la cuve de lavage 2, par exemple par une conduite.

Et la pompe de circulation d'eau 6 est reliée en sortie à une conduite d'alimentation en eau 13 et cette conduite d'alimentation en eau 13 est reliée au réservoir 11 comportant la poche 12 contenant un matériau à accumulation de chaleur.

L'alimentation en eau d'au moins un bain de lavage et/ou de rinçage depuis la cuve de lavage 2 jusqu'au réservoir 11 comportant la poche 12 contenant un matériau à accumulation de chaleur peut être contrôlée au moyen d'une vanne 14 et de la pompe de circulation d'eau 6. La vanne 14 et la pompe de circulation d'eau 6 sont commandées par des moyens de commande de la machine à laver la vaisselle 1, tel que par exemple un microcontrôleur.

La vanne 14 est située sur la conduite d'alimentation en eau 13 reliant la pompe de circulation d'eau 6 au réservoir 11 comportant la poche 12 contenant un matériau à accumulation de chaleur.

L'alimentation en eau d'au moins un bain de lavage et/ou de rinçage depuis la cuve de lavage 2 jusqu'audit au moins un moyen de pulvérisation d'eau 4a, 4b peut être contrôlée au moyen d'un moyen de répartition d'eau 15 et de la pompe de circulation d'eau 6. Le moyen de répartition d'eau 15 et la pompe de circulation d'eau 6 sont commandés par des moyens de commande de la machine à laver la vaisselle 1, tel que par exemple un microcontrôleur.

Dans un mode de réalisation illustré à la figure 1, le réservoir 11 est connecté au circuit hydraulique de distribution d'eau 5 en amont d'un moyen de répartition d'eau 15.

Ainsi, l'eau contenue dans la cuve de lavage 2 provenant d'au moins un bain de lavage et/ou de rinçage est :
- soit uniquement dirigée vers le réservoir 11 lorsque le moyen de répartition d'eau 15 est dans une première position de sorte à remplir en eau ledit réservoir 11 et à bloquer l'alimentation en eau dudit au moins au moins un moyen d'aspersion d'eau 4a, 4b ;
- soit uniquement dirigée vers ledit au moins un moyen d'aspersion d'eau 4a, 4b lorsque le moyen de répartition d'eau 15 est dans une deuxième position de sorte à alimenter en eau ledit au moins au moins un moyen d'aspersion d'eau 4a, 4b et à bloquer l'alimentation en eau dudit réservoir 11.

De cette manière, le moyen de répartition d'eau 15 comprend au moins deux positions de sorte à alimenter en eau alternativement soit le réservoir 11 soit ledit au moins un moyen d'aspersion d'eau 4a, 4b.

Avantageusement, le moyen de répartition d'eau 15 est un clapet à disque rotatif multi - positions. Le positionnement du disque rotatif à l'intérieur du clapet permet d'obturer ou de libérer des ouvertures de passage d'eau de sorte à contrôler l'alimentation en eau de chacun des organes du circuit hydraulique de distribution d'eau. Le moyen de répartition d'eau 15 est contrôlé par les moyens de commande de la machine à laver la vaisselle 1, tel que par exemple un microcontrôleur.

Dans ce mode de réalisation de l'invention, le remplissage en eau du réservoir 11 est mis en oeuvre par des moyens de commande de la machine à laver la vaisselle 1, tel que par exemple un microcontrôleur, commandant le moyen de répartition d'eau 15 dans une première position, soit dans un état fermé, de sorte qu'au moins une conduite de circulation d'eau 20a, 20b alimentant en eau ledit au moins un moyen d'aspersion d'eau 4a, 4b soit obturée.

Ainsi, suite à l'ouverture de la vanne 14 montée sur la conduite de circulation d'eau 13 reliant la pompe de circulation d'eau 6 au réservoir 11, la pompe de circulation d'eau 6 envoie l'eau dans la conduite de circulation d'eau 13 puis dans le réservoir 11 de sorte à remplir en eau ce dernier.

Dans un autre mode de réalisation de l'invention, le moyen de répartition d'eau 15 peut comprendre plus de deux positions de sorte à alimenter en eau d'une part alternativement le réservoir 11 et ledit au moins un moyen d'aspersion d'eau 4a, 4b et d'autre part simultanément le réservoir 11 et ledit au moins un moyen d'aspersion d'eau 4a, 4b.

L'eau contenue dans la cuve de lavage 2 provenant d'au moins un bain de lavage et/ou de rinçage peut également être répartie entre ledit réservoir 11 et ledit au moins un moyen d'aspersion d'eau 4a, 4b lorsque le moyen de répartition d'eau 15 est dans une troisième position, ou encore répartie entre plusieurs moyens d'aspersion d'eau 4a, 4b lorsque le moyen de répartition d'eau 15 est dans une quatrième position en fonction du nombre de positions dudit moyen de répartition d'eau 15.

Dans un autre mode de réalisation non illustré, la conduite de circulation d'eau 13 reliée au réservoir de stockage d'eau 11 est connectée directement à un moyen de distribution d'eau, où ledit moyen de distribution d'eau alimente en eau soit ledit au moins un moyen d'aspersion d'eau 4a, 4b soit ledit réservoir de stockage d'eau 11 au moyen de ladite pompe de circulation d'eau 6.

Ainsi, la conduite de circulation d'eau 13 est connectée directement au moyen de distribution d'eau garantissant une alimentation en eau exclusivement soit vers le réservoir de stockage d'eau 11 soit vers ledit au moins un moyen d'aspersion d'eau 4a, 4b.

Le moyen de distribution d'eau peut être un composant hydraulique comprenant un élément en déplacement de sorte à distribuer de l'eau au travers de différentes conduites de circulation d'eau 13, 20a, 20b, où ledit élément en déplacement est actionné par exemple par un thermo actionneur ou un moteur.

Dans un mode de réalisation de l'invention, l'ouverture et la fermeture de la vanne 14 sont mises en oeuvre électriquement au travers des moyens de commande de la machine à laver la vaisselle 1.

Dans un autre mode de réalisation, l'ouverture de la vanne 14 est mise en oeuvre par la pression de l'eau dans le circuit hydraulique de distribution d'eau 5 liée à la mise en fonctionnement de la pompe de circulation d'eau 6 lorsque le moyen de répartition d'eau 12 est en position fermée.

La vanne 14 peut comprendre un élément de rappel élastique d'un élément d'obturation (non représenté) permettant d'obturer le passage d'eau à l'intérieur de ladite vanne 14 lorsque la pression dans la conduite 21 du circuit hydraulique de distribution d'eau 5 exercée par la pompe de circulation d'eau 6 est inférieure à une valeur prédéterminée.

La pression dans la conduite 21 du circuit hydraulique de distribution d'eau 5 augmente lorsque la partie 5b dudit circuit hydraulique de distribution d'eau 5 est fermée par le moyen de répartition d'eau 15 et que la pompe de circulation d'eau 6 est mise en fonctionnement.

Dès que la pression exercée par la pompe de circulation d'eau 6 dans la conduite 21 du circuit hydraulique de distribution d'eau 5 dépasse la valeur prédéterminée permettant le déplacement de l'élément d'obturation de la vanne 14, la vanne 14 est en position ouverte de sorte à remplir en eau le réservoir de stockage d'eau 11.

La vanne 14 est en position fermée au moyen de l'élément de rappel élastique ramenant l'élément d'obturation en position initiale dès que la pression dans la conduite 21 du circuit hydraulique de distribution d'eau 5 diminue en dessous de la valeur prédéterminée.

De cette manière, l'eau contenue dans le réservoir de stockage d'eau 11 est contenue à l'intérieur de celui-ci dès la fermeture de la vanne 14 et les moyens d'aspersion d'eau 4a, 4b peuvent être alimentés en eau par le déplacement du moyen de répartition d'eau 15 en position d'alimentation en eau desdits moyens d'aspersion d'eau 4a, 4b et la mise en fonctionnement de la pompe de circulation d'eau 6.

L'étanchéité de la vanne 14 est garantie par l'élément de rappel élastique de l'élément d'obturation de ladite vanne 14.

Lorsque la vanne 14 est en position fermée, l'étanchéité de ladite vanne 14 est renforcée par la pression de l'eau contenue dans le réservoir de stockage d'eau 11 exercée sur l'élément d'obturation de ladite vanne 14. La pression de l'eau contenue dans le réservoir de stockage d'eau 11 exercée sur l'élément d'obturation de la vanne 14 est dirigée dans la même direction que la pression exercée par l'élément de rappel élastique de l'élément d'obturation de ladite vanne 14.

La vanne 14 est ouverte électriquement par les moyens de commande de la machine à laver la vaisselle 1 de sorte à évacuer l'eau du réservoir de stockage 11 vers la cuve de lavage 2.

Dans le mode de réalisation illustré à la figure 1, la conduite de circulation d'eau 13 est connectée sur une conduite de circulation d'eau 21 reliant la pompe de circulation d'eau 6 au moyen de répartition d'eau 15 puis à au moins un moyen d'aspersion d'eau 4a, 4b de sorte que la partie 5a du circuit hydraulique de distribution d'eau 5 est reliée à la partie 5b dudit circuit hydraulique de distribution d'eau 5.

La pompe de circulation d'eau 6 peut ainsi alimenter en eau d'au moins bain de lavage et/ou de rinçage ledit au moins un moyen de pulvérisation d'eau 4a, 4b et le réservoir 11 comportant la poche 12 contenant un matériau à accumulation de chaleur.

La pompe de circulation d'eau 6 peut alimenter en eau d'au moins bain de lavage et/ou de rinçage ledit au moins un moyen de pulvérisation d'eau 4a, 4b et le réservoir 11 comportant la poche 12 contenant un matériau à accumulation de chaleur soit simultanément soit indépendamment.

Le réservoir 11 comportant la poche 12 contenant un matériau à accumulation de chaleur comporte une ouverture d'alimentation en eau 16 d'au moins un bain de lavage et/ou de rinçage située en partie inférieure.

Le réservoir 11 comportant la poche 12 contenant un matériau à accumulation de chaleur est également couplé de manière fluidique avec la cuve de lavage 2 au moyen d'une connexion 19 pouvant être réalisée par une conduite.

Ainsi, la connexion 19 entre le réservoir 11 comportant la poche 12 contenant un matériau à accumulation de chaleur et la cuve de lavage 2 permet d'évacuer l'air contenu dans ledit réservoir 11 lors de l'introduction d'eau d'au moins un bain de lavage et/ou de rinçage dans ledit réservoir 11 par l'ouverture d'alimentation en eau 16.

La connexion 19 entre le réservoir 11 comportant la poche 12 contenant un matériau à accumulation de chaleur et la cuve de lavage 2 peut également permettre d'évacuer l'eau d'au moins un bain de lavage et/ou de rinçage introduite dans ledit réservoir 11 dans la cuve de lavage 2.

Préférentiellement, le réservoir 11 comportant la poche 12 contenant un matériau à accumulation de chaleur est situé verticalement le long d'une paroi 2b de la cuve de lavage 2 et s'étend entre une ouverture d'alimentation en eau 16 et une ouverture de sortie d'air et/ou d'eau 17.

L'ouverture de sortie 17 du réservoir 11 peut servir pour réaliser une mise à l'air connectée avec la cuve de lavage 2, pour déverser le trop plein d'eau d'au moins un bain de lavage et/ou de rinçage introduit à l'intérieur dudit réservoir 11 vers la cuve de lavage 2, et/ou pour mettre l'eau d'au moins un bain de lavage et/ou de rinçage en circulation depuis l'intérieur dudit réservoir 11 vers la cuve de lavage 2.

En particulier, l'eau d'au moins un bain de lavage et/ou de rinçage peut être en circulation depuis l'intérieur du réservoir 11 vers la cuve de lavage 2 si ledit réservoir 11 a une contenance insuffisante pour recevoir l'ensemble d'au moins un bain de lavage et/ou de rinçage en plus de ladite au moins une réserve d'un matériau à accumulation de chaleur 10.

L'ouverture de sortie 17 du réservoir 11 est préférentiellement située en partie supérieure dudit réservoir 11.

Par ailleurs, l'ouverture d'alimentation en eau 16 du réservoir 11 peut également servir à vidanger complètement ledit réservoir 11 de l'eau d'au moins un bain de lavage et/ou de rinçage introduite à l'intérieur dudit réservoir 11.

Pratiquement, la poche 12 contenant un matériau à accumulation de chaleur est fixée à l'intérieur du réservoir 11 par des moyens de fixation 18.

En particulier, la poche 12 contenant un matériau à accumulation de chaleur peut être accrochée au réservoir 11 au moyen d'un crochet (non représenté) fixé en partie supérieure dudit réservoir 11.

Bien entendu, les moyens de fixation de la poche contenant un matériau à accumulation de chaleur à l'intérieur du réservoir ne sont nullement limitatifs et peuvent être différents.

Préférentiellement, la poche 12 contenant un matériau à accumulation de chaleur est fixée à l'intérieur du réservoir 11 par des moyens de fixation 18 de sorte que ledit au moins un bain de lavage et/ou de rinçage puisse circuler autour de ladite poche 12, et notamment en partie supérieure et inférieure dudit réservoir 11.

Avantageusement, la poche 12 contenant un matériau à accumulation de chaleur est autoporteuse.

Ainsi, la forme de la poche 12 contenant un matériau à accumulation de chaleur permet de garantir la stabilité de celle-ci à l'intérieur du réservoir 11 sans faire appel à des moyens de maintien de ladite poche 12.

De cette manière, la poche 12 contenant un matériau à accumulation de chaleur étant autoporteuse peut être accrochée en haut du réservoir 11 soit au moyen d'un ou plusieurs crochets soit en étant maintenue au niveau d'une zone de jonction de deux parois du réservoir 11, pouvant être par exemple soudées entre elles.

Préférentiellement, la poche 12 contenant un matériau à accumulation de chaleur comprend deux parois extérieures raccordées ensemble, lesdites deux parois extérieures de ladite poche 12 contenant un matériau à accumulation de chaleur étant mises en contact avec lesdits au moins un premier et deuxième bain de liquide de lavage et/ou de rinçage.

Avantageusement, les deux parois extérieures de la poche 12 contenant un matériau à accumulation de chaleur peuvent avoir une forme ondulée ou demi cylindrique de sorte à augmenter la surface d'échange de chaleur entre le matériau à accumulation de chaleur et au moins un bain de lavage et/ou de rinçage et par conséquent d'améliorer l'efficacité de ladite au moins une réserve d'un matériau à accumulation de chaleur 10.

La poche 12 contenant un matériau à accumulation de chaleur est étanche de sorte que l'eau du bain de lavage et/ou de rinçage ne puisse pénétrer à l'intérieur de ladite poche 12 lorsque au moins un bain de lavage et/ou de rinçage est mis en circulation entre la cuve de lavage 2 et le réservoir 11.

Dans un premier mode de réalisation de l'invention, la poche 12 contenant un matériau à accumulation de chaleur est réalisée dans un matériau souple formant une enveloppe avec le matériau à accumulation de chaleur contenu à l'intérieur de ladite poche 12.

Le volume de la poche 12 contenant un matériau à accumulation de chaleur peut être déterminé et dimensionné en fonction du matériau souple employé pour former ladite poche 12 de sorte que l'épaisseur maximum de ladite poche 12 soit maîtrisée suite au remplissage de cette dernière avec le matériau à accumulation de chaleur.

La poche 12 contenant un matériau à accumulation de chaleur peut être constituée de deux parois extérieures maintenues ensemble par exemple par soudage.

Bien entendu, le moyen de maintien des deux parois de la poche contenant un matériau à accumulation de chaleur n'est nullement limitatif et peut être différent.

Le matériau souple de la poche 12 contenant un matériau à accumulation de chaleur peut être un matériau tissé ou non, plastifié, ou encore un film de polyéthylène, ou de polypropylène.

Bien entendu, le matériau employé pour réaliser la poche contenant un matériau à accumulation de chaleur n'est nullement limitatif et peut être différent.

Dans un deuxième mode de réalisation de l'invention, la poche 12 contenant un matériau à accumulation de chaleur est rigide et préformée.

La poche 12 contenant un matériau à accumulation de chaleur peut être constituée de deux parois extérieures préformées et rigides maintenues ensemble par exemple par soudage.

Bien entendu, le moyen de maintien des deux parois de la poche contenant un matériau à accumulation de chaleur n'est nullement limitatif et peut être différent.

L'épaisseur de ladite au moins une paroi formant ladite au moins une poche 12 contenant un matériau à accumulation de chaleur peut être comprise entre 0,3mm et 1,5mm, et préférentiellement inférieure à 1 mm.

La poche 12 contenant un matériau à accumulation de chaleur est réalisée dans un matériau résistant aux agents lessiviels dudit au moins un bain de lavage et/ou de rinçage.

La poche 12 contenant un matériau à accumulation de chaleur est également réalisée dans un matériau résistant à une température dudit au moins un bain de lavage et/ou de rinçage.

La poche 12 contenant un matériau à accumulation de chaleur est adaptée à être utilisée lors de l'accumulation de chaleur provenant d'au moins un bain de lavage et/ou de rinçage dans une plage de température comprise entre 35°C et 90°C.

Préférentiellement, le matériau à accumulation de chaleur contenu dans la poche 12 est un matériau à changement de phase.

Et la température de changement de phase du matériau à accumulation de chaleur de la poche 12 est comprise dans une plage de température pouvant s'étendre entre 30°C et 40 °C.

Bien entendu, la température de changement de phase du matériau à accumulation de chaleur n'est nullement limitative et peut être différente.

Le matériau à changement de phase de ladite au moins une réserve d'un matériau à accumulation de chaleur 10 peut être notamment de la paraffine, de l'huile de palme, ou encore un acide gras saturé.

Bien entendu, le type de matériau à changement de phase n'est nullement limitatif et peut être différent.

La poche 12 contenant un matériau à accumulation de chaleur est également adaptée à résister à des contraintes physiques liées notamment :
- à des vibrations et/ou des chocs lors du transport de l'appareil de lavage 1 et/ou lors de la mise en oeuvre d'un cycle de fonctionnement de l'appareil de lavage 1;
- à des chocs thermiques lors de la mise en oeuvre d'un cycle de fonctionnement de l'appareil de lavage 1 et/ou à des températures extrêmes lors du transport de l'appareil de lavage 1 ;
- à sa propre masse tout au long de la durée de vie de l'appareil de lavage 1.

Préférentiellement, le réservoir 11 comportant ladite au moins une réserve d'un matériau à accumulation de chaleur 10 est isolé thermiquement.

Ainsi, l'énergie calorifique d'au moins un bain de lavage et/ou de rinçage captée par ladite au moins une réserve d'un matériau à accumulation de chaleur 10 est conservée pendant une durée plus longue de sorte à restituer la plus grande partie de cette énergie calorifique captée lors d'une phase suivante d'un cycle de fonctionnement en cours ou lors d'une phase d'un cycle de fonctionnement suivant mis en oeuvre par la machine à laver la vaisselle 1.

L'isolant thermique du réservoir 11 peut être par exemple du polystyrène expansé ou du feutre.

Bien entendu, l'isolant thermique du réservoir n'est nullement limitatif et peut être différent.

On va décrire à présent un procédé de commande en fonctionnement d'un appareil de lavage conforme à l'invention.

Le procédé comprend au moins les étapes suivantes :
- introduction successive desdits au moins un premier et deuxième bain de lavage et/ou de rinçage depuis la cuve de lavage 2 à l'intérieur d'un réservoir 11 comportant ladite au moins une réserve d'un matériau à accumulation de chaleur 10,
- où ladite au moins une réserve d'un matériau à accumulation de chaleur 10 logée à l'intérieur du réservoir 11 est réalisée sous la forme d'une poche 12 contenant un matériau à accumulation de chaleur.

Ainsi, au moins un premier bain de lavage et/ou de rinçage est introduit depuis la cuve de lavage 2 dans le réservoir 11 comportant au moins une poche 12 contenant un matériau à accumulation de chaleur pour récupérer l'énergie calorifique dudit au moins un premier bain de lavage et/ou de rinçage. Et au moins un deuxième bain de lavage et/ou de rinçage est introduit depuis la cuve de lavage 2 dans le réservoir 11 comportant au moins une poche 12 contenant un matériau à accumulation de chaleur pour restituer l'énergie calorifique captée audit au moins un deuxième bain de lavage et/ou de rinçage.

Lesdits au moins un premier et deuxième bain de lavage et/ou de rinçage introduits dans le réservoir 11 échangent de la chaleur avec ladite au moins une réserve d'un matériau à accumulation de chaleur 10 logée à l'intérieur dudit réservoir 11 et réalisée sous la forme d'une poche 12 contenant un matériau à accumulation de chaleur de sorte que ledit matériau à accumulation de chaleur absorbe l'énergie calorifique dudit au moins un premier bain de lavage et/ou de rinçage et que ledit matériau à accumulation de chaleur restitue l'énergie calorifique captée audit au moins un deuxième bain de lavage et/ou de rinçage.

L'étape d'introduction dudit au moins un premier bain de lavage et/ou de rinçage depuis la cuve de lavage 2 à l'intérieur du réservoir 11 est suivie d'une étape de récupération de l'énergie calorifique dudit au moins un premier bain de lavage et/ou de rinçage par la poche 12 contenant un matériau à accumulation de chaleur.

Lors de l'étape de récupération de l'énergie calorifique dudit au moins un premier bain de lavage et/ou de rinçage par la poche 12 contenant un matériau à accumulation de chaleur du type à changement de phase, le matériau à changement de phase passe de l'état solide à l'état liquide de sorte à récupérer l'énergie calorifique dudit au moins un premier bain de lavage et/ou de rinçage.

L'étape de récupération de l'énergie calorifique dudit au moins un premier bain de lavage et/ou de rinçage est suivie d'une étape d'évacuation dudit au moins un premier bain de lavage et/ou de rinçage depuis le réservoir 11 vers la cuve de lavage 2 et/ou vers un réseau d'eau usée.

Dans un mode de réalisation, suite à l'étape de récupération de l'énergie calorifique dudit au moins un premier bain de lavage et/ou de rinçage par ladite au moins une réserve d'un matériau à accumulation de chaleur 10, l'eau dudit au moins un premier bain de lavage et/ou de rinçage est évacuée dans la cuve de lavage 2, et en particulier dans le puisard 7. Puis, cette eau dudit au moins un premier bain de lavage et/ou de rinçage est évacuée vers un réseau d'eau usée au moyen de la pompe de vidange 8.

Dans un autre mode de réalisation, suite à l'étape de récupération de l'énergie calorifique dudit au moins un premier bain de lavage et/ou de rinçage par ladite au moins une réserve d'un matériau à accumulation de chaleur 10, l'eau dudit au moins un premier bain de lavage et/ou de rinçage peut être évacuée directement vers un réseau d'eau usée au moyen d'une pompe de vidange.

Dans un autre mode de réalisation, une étape de conservation dudit au moins un premier bain de lavage et/ou de rinçage en contact avec ladite au moins une réserve d'un matériau à accumulation de chaleur 10 dans le réservoir 11 est mise en oeuvre entre l'étape de récupération de l'énergie calorifique dudit au moins un premier bain de lavage et/ou de rinçage et l'étape d'évacuation dudit au moins un premier bain de lavage et/ou de rinçage depuis ledit réservoir 11 vers la cuve de lavage 2 de sorte à réutiliser ledit au moins un premier bain de lavage et/ou de rinçage au cours d'un cycle de fonctionnement suivant mis en oeuvre par l'appareil de lavage 1.

De cette manière, ledit au moins un premier bain de lavage et/ou de rinçage est réutilisé au cours d'un cycle de fonctionnement suivant mis en oeuvre par l'appareil de lavage 1 tout en récupérant un maximum d'énergie calorifique provenant du cycle de fonctionnement précédent.

Lors de la mise en oeuvre d'une phase du cycle de fonctionnement suivant par l'appareil de lavage 1, ledit au moins un premier bain de lavage et/ou de rinçage conservé en contact avec ladite au moins une réserve d'un matériau à accumulation de chaleur 10 dans le réservoir 11 est évacué dudit réservoir 11 vers le puisard 7 de la cuve de lavage 2 par l'ouverture de la vanne 14, où la pompe de circulation d'eau 6 est maintenue à l'arrêt.

Et ensuite, ledit au moins un premier bain de lavage et/ou de rinçage réutilisé est soit évacué de l'appareil de lavage 1 vers un réseau d'eau usée au moyen de la pompe de vidange 8 soit de nouveau retourné dans le réservoir 11 par la mise en fonctionnement de la pompe de circulation d'eau 6 et l'ouverture de la vanne 14.

Lorsqu'une étape de conservation dudit au moins un premier bain de lavage et/ou de rinçage en contact avec ladite au moins une réserve d'un matériau à accumulation de chaleur 10 dans le réservoir 11 est mise en oeuvre par l'appareil de lavage 1, ledit au moins un premier bain de lavage et/ou de rinçage est introduit dans le réservoir 11 au cours d'un premier cycle de fonctionnement mis en oeuvre par l'appareil de lavage 1 et ledit au moins un deuxième bain de lavage et/ou de rinçage est introduit dans le réservoir 11 au cours d'un deuxième cycle de fonctionnement mis en oeuvre par l'appareil de lavage 1 et suivant ledit premier cycle de fonctionnement.

L'étape d'introduction dudit au moins un deuxième bain de lavage et/ou de rinçage depuis la cuve de lavage 2 à l'intérieur dudit réservoir 11 est suivie d'une étape de restitution de l'énergie calorifique captée par la poche 12 contenant un matériau à accumulation de chaleur.

Lors de l'étape de restitution de l'énergie calorifique captée audit au moins un deuxième bain de lavage et/ou de rinçage par la poche 12 contenant un matériau à accumulation de chaleur du type à changement de phase, le matériau à changement de phase passe de l'état liquide à l'état solide de sorte à restituer l'énergie calorifique captée précédemment audit au moins un deuxième bain de lavage et/ou de rinçage.

L'étape de restitution de l'énergie calorifique captée est suivie d'une étape d'évacuation dudit au moins un deuxième bain de lavage et/ou de rinçage depuis le réservoir 11 vers la cuve de lavage 2.

Dans un mode de réalisation, suite à l'étape de restitution de l'énergie calorifique captée audit au moins un deuxième bain de lavage et/ou de rinçage par ladite au moins une réserve d'un matériau à accumulation de chaleur 10, l'eau dudit au moins un deuxième bain de lavage et/ou de rinçage est évacuée dans la cuve de lavage 2, et en particulier dans le puisard 7. Puis, cette eau dudit au moins un deuxième bain de lavage et/ou de rinçage peut être évacuée vers un réseau d'eau usée au moyen de la pompe de vidange 8.

Dans un autre mode de réalisation, une étape de conservation dudit au moins un deuxième bain de lavage et/ou de rinçage en contact avec ladite au moins une réserve d'un matériau à accumulation de chaleur 10 dans le réservoir 11 est mise en oeuvre entre l'étape de restitution de l'énergie calorifique captée et l'étape d'évacuation dudit au moins un deuxième bain de lavage et/ou de rinçage depuis le réservoir 11 vers la cuve de lavage 2 de sorte à réutiliser ledit au moins un deuxième bain de lavage et/ou de rinçage au cours d'un cycle de fonctionnement suivant mis en oeuvre par l'appareil de lavage 1.

De cette manière, ledit au moins un deuxième bain de lavage et/ou de rinçage est réutilisé au cours d'un cycle de fonctionnement suivant mis en oeuvre par l'appareil de lavage 1 tout en récupérant un maximum d'énergie calorifique provenant du cycle de fonctionnement précédent.

Lors de la mise en oeuvre d'une phase du cycle de fonctionnement suivant par l'appareil de lavage 1, ledit au moins un deuxième bain de lavage et/ou de rinçage conservé en contact avec ladite au moins une réserve d'un matériau à accumulation de chaleur 10 dans le réservoir 11 est évacué dudit réservoir 11 vers le puisard 7 de la cuve de lavage 2 par l'ouverture de la vanne 14, où la pompe de circulation d'eau 6 est maintenue à l'arrêt.

Et ensuite, ledit au moins un deuxième bain de lavage et/ou de rinçage réutilisé est soit évacué de l'appareil de lavage 1 vers un réseau d'eau usée au moyen de la pompe de vidange 8 soit de nouveau retourné dans le réservoir 11 par la mise en fonctionnement de la pompe de circulation d'eau 6 et l'ouverture de la vanne 14.

Lors des étapes d'échange de chaleur mises en oeuvre par l'échangeur de chaleur 9, l'eau dudit au moins un premier et deuxième bain de lavage et/ou de rinçage est introduite dans ledit réservoir 11 et mise en contact avec la poche 12 contenant un matériau à accumulation de chaleur de sorte à respectivement récupérer l'énergie calorifique dudit au moins un premier bain de lavage et/ou de rinçage par la poche 12 contenant un matériau à accumulation de chaleur et restituer l'énergie calorifique captée par la poche 12 contenant un matériau à accumulation de chaleur audit au moins un deuxième bain de lavage et/ou de rinçage.

L'eau dudit au moins un premier et deuxième bain de lavage et/ou de rinçage monte dans le réservoir 11, entoure la poche 12 contenant un matériau à accumulation de chaleur et soit ladite poche 12 absorbe l'énergie calorifique dudit au moins un premier bain de lavage et/ou de rinçage soit ladite poche 12 restitue l'énergie calorifique captée audit au moins un deuxième bain de lavage et/ou de rinçage.

La poche 12 contenant un matériau à accumulation de chaleur étant constituée de deux parois extérieures permet d'augmenter la surface d'échange de chaleur et par conséquent d'améliorer l'échange de chaleur entre le matériau à accumulation de chaleur et lesdits au moins un premier et second bain de lavage et/ou de rinçage.

Suite à un échange de chaleur entre le matériau à accumulation de chaleur et l'un desdits au moins un premier et second bain de lavage et/ou de rinçage, le réservoir 11 est vidé respectivement de l'un desdits au moins un premier et second bain de lavage et/ou de rinçage.

La poche 12 contenant un matériau à accumulation de chaleur est maintenu à l'intérieur du réservoir 11 et reste dans celui-ci lors de l'évacuation de l'un desdits au moins un premier et second bain de lavage et/ou de rinçage dudit réservoir 11.

Le matériau à accumulation de chaleur est conservé à l'intérieur de la poche 12 étanche au cours des différentes étapes du procédé.

Dans un premier mode de réalisation de l'invention, l'au moins un des premier et deuxième bain de lavage et/ou de rinçage est stocké à l'intérieur du réservoir 11 respectivement lors des étapes de récupération d'énergie calorifique et de restitution de l'énergie calorifique captée.

Bien entendu, les premier et deuxième bains de lavage et/ou de rinçage peuvent être stockés à l'intérieur du réservoir 11 respectivement lors des étapes de récupération d'énergie calorifique et de restitution de l'énergie calorifique captée.

Dans un deuxième mode de réalisation de l'invention, l'au moins un des premier et deuxième bain de lavage et/ou de rinçage est mis en circulation à l'intérieur du réservoir 11 respectivement lors des étapes de récupération d'énergie calorifique et de restitution de l'énergie calorifique captée.

Bien entendu, les premier et deuxième bains de lavage et/ou de rinçage peuvent être mis en circulation à l'intérieur du réservoir 11 respectivement lors des étapes de récupération d'énergie calorifique et de restitution de l'énergie calorifique captée.

La mise en circulation de l'au moins un des premier et deuxième bain de lavage et/ou de rinçage à l'intérieur du réservoir 11 peut être réalisée depuis l'ouverture d'alimentation en eau 16 reliée à la pompe de circulation 6 jusqu'à l'ouverture de sortie 17 reliée à la cuve de lavage 2.

Dans un mode de réalisation, l'au moins un desdits premier et deuxième bain de lavage et/ou de rinçage peuvent être mis en circulation de manière répétée entre la cuve de lavage 2 et le réservoir 11 puis ledit réservoir 11 et ladite cuve de lavage 2 de sorte à améliorer les échanges de chaleur entre ledit au moins un desdits premier et deuxième bain de lavage et/ou de rinçage et la poche 12 contenant un matériau à accumulation de chaleur.

Une telle mise en circulation de manière répétée d'au moins un desdits premier et deuxième bain de lavage et/ou de rinçage entre la cuve de lavage 2 et le réservoir 11 puis ledit réservoir 11 et ladite cuve de lavage 2 permet d'augmenter la durée des échanges de chaleur et/ou d'introduire une quantité d'eau d'au moins un bain de lavage et/ou de rinçage supérieure à celle de la contenance du réservoir 11 de sorte à récupérer ou à restituer une quantité d'énergie calorifique maximale.

Bien entendu, chaque introduction d'une partie d'au moins un desdits premier et deuxième bain de lavage et/ou de rinçage dans le réservoir 11 peut être suivie d'une étape de stockage de celui-ci dans ledit réservoir 11.

Dans un autre mode de réalisation, l'au moins un desdits premier et deuxième bain de lavage et/ou de rinçage peut être dirigé en totalité vers le réservoir 11 par les moyens de commande de l'appareil de lavage 1.

Si la quantité d'eau d'au moins un desdits premier et deuxième bain de lavage et/ou de rinçage à introduire dans le réservoir 11 est supérieure à la contenance dudit réservoir 11, alors la quantité d'eau d'au moins un desdits premier et deuxième bain de lavage et/ou de rinçage en surplus est évacuée en dehors dudit réservoir 11 par un dispositif de trop plein soit vers la cuve de lavage 2 soit vers un réseau d'eau usée, ou encore un dispositif de détection d'un niveau d'eau maximum du réservoir 11 est relié aux moyens de commande de l'appareil de lavage 1 de sorte à arrêter le remplissage dudit réservoir 11 dès la détection du niveau d'eau maximum puis la quantité d'eau d'au moins un desdits premier et deuxième bain de lavage et/ou de rinçage en surplus est évacuée vers un réseau d'eau usée.

Par ailleurs, l'appareil de lavage 1 peut comprendre un cycle de nettoyage du réservoir 11 par la circulation d'un bain pouvant contenir un produit de nettoyage, tel que par exemple un produit chloré. Ce cycle de nettoyage du réservoir 11 peut ainsi permettre de retirer des salissures et/ou des éléments en suspension entraînées par au moins un des bains de lavage et/ou de rinçage provenant de la cuve de lavage 2 et introduit dans ledit réservoir 11.

En outre, le réservoir 11 peut être conçu de sorte que les surfaces internes de celui-ci soient lisses et sans bavures.

On va décrire à présent un mode de réalisation de l'invention mis en oeuvre dans une machine à laver la vaisselle telle qu'illustrée à la figure 1.

L'énergie calorifique d'un bain de lavage est récupérée par ladite au moins une réserve d'un matériau à accumulation de chaleur 10 par la mise en contact du bain de lavage avec ladite au moins une réserve d'un matériau à accumulation de chaleur 10 logée à l'intérieur du réservoir 11.

Le bain de lavage peut être mis en circulation ou non à l'intérieur du réservoir 11 lors de l'étape de récupération d'énergie calorifique.

Puis, le bain de lavage est évacué du réservoir 11 vers le puisard 7 de la cuve de lavage 2 par l'ouverture de la vanne 14, où la pompe de circulation d'eau 6 est maintenue à l'arrêt.

Et ensuite, le bain de lavage est évacué de la machine à laver la vaisselle 1 vers un réseau d'eau usée au moyen de la pompe de vidange 8.

L'énergie calorifique récupérée du bain de lavage est stockée dans ladite au moins une réserve d'un matériau à accumulation de chaleur 10 jusqu'au remplissage en eau du réseau de la cuve de lavage 2 puis du réservoir 11 d'un bain de rinçage. L'eau du réseau alimentée dans la machine à laver la vaisselle 1 est mise en contact avec ladite au moins une réserve d'un matériau à accumulation de chaleur 10 logée dans le réservoir 11 et cette eau du bain de rinçage capte l'énergie calorifique stockée par ladite au moins une réserve d'un matériau à accumulation de chaleur 10.

Puis, le bain de rinçage chaud est évacué du réservoir 11 vers le puisard 7 de la cuve de lavage 2 par l'ouverture de la vanne 14, où la pompe de circulation d'eau 6 est maintenue à l'arrêt.

Et ensuite, le bain de rinçage chaud est utilisé dans la machine à laver la vaisselle 1 pour rincer les pièces de vaisselle au moyen de la pompe de circulation 6.

Suite à la phase de rinçage chaud des pièces de vaisselle contenues dans la cuve de lavage 2 de la machine à laver la vaisselle 1, l'énergie calorifique du bain de rinçage chaud est récupérée de manière similaire à l'énergie calorifique du bain de lavage par la mise en contact du bain de rinçage chaud avec ladite au moins une réserve d'un matériau à accumulation de chaleur 10 logée à l'intérieur du réservoir 11.

Puis, le bain de rinçage chaud est évacué du réservoir 11 vers le puisard 7 de la cuve de lavage 2 par l'ouverture de la vanne 14, où la pompe de circulation d'eau 6 est maintenue à l'arrêt.

Et ensuite, le bain de rinçage chaud est évacué de la machine à laver la vaisselle 1 vers un réseau d'eau usée au moyen de la pompe de vidange 8.

L'énergie calorifique récupérée du bain de rinçage chaud est stockée dans ladite au moins une réserve d'un matériau à accumulation de chaleur 10 jusqu'à :
- soit une phase de séchage ventilé des pièces de vaisselle, où un flux d'air entrant dans la cuve de lavage 2 est mis en contact avec ladite au moins une réserve d'un matériau à accumulation de chaleur 10 logée à l'intérieur du réservoir 11 de sorte à réchauffer ledit flux d'air entrant et à améliorer l'efficacité de séchage des pièces de vaisselle ;
- soit une phase de lavage d'un cycle de fonctionnement suivant de la machine à laver la vaisselle 1, où de l'eau du réseau alimentée dans la machine à laver la vaisselle 1 est mise en contact avec ladite au moins une réserve d'un matériau à accumulation de chaleur 10 logée dans le réservoir 11 et cette eau du bain de lavage capte l'énergie calorifique stockée par ladite au moins une réserve d'un matériau à accumulation de chaleur 10.

Dans un autre mode de réalisation, suite à l'étape de récupération de l'énergie calorifique du bain de rinçage chaud par la mise en contact de ce dernier avec ladite au moins une réserve d'un matériau à accumulation de chaleur 10 logée à l'intérieur du réservoir 11, le bain de rinçage chaud est conservé en contact ladite au moins une réserve d'un matériau à accumulation de chaleur 10 dans ledit réservoir 11 jusqu'à un cycle de fonctionnement suivant mis en oeuvre par la machine à laver la vaisselle 1 et est réutilisé comme bain de lavage au cours d'une phase de lavage dudit cycle de fonctionnement suivant.

Lors de la mise en oeuvre de la phase de lavage du cycle de fonctionnement suivant par la machine à laver la vaisselle 1, le bain de rinçage chaud conservé en contact ladite au moins une réserve d'un matériau à accumulation de chaleur 10 dans le réservoir 11 est évacué dudit réservoir 11 vers le puisard 7 de la cuve de lavage 2 par l'ouverture de la vanne 14, où la pompe de circulation d'eau 6 est maintenue à l'arrêt.

Et ensuite, le bain de rinçage chaud réutilisé est soit évacué de la machine à laver la vaisselle 1 vers un réseau d'eau usée au moyen de la pompe de vidange 8 soit de nouveau retourné dans le réservoir 11 par la mise en fonctionnement de la pompe de circulation d'eau 6 et l'ouverture de la vanne 14.

En outre, au moins un bain de lavage et/ou de rinçage d'un cycle de fonctionnement en cours ou suivant peut être chauffé par un moyen de chauffage présent dans la cuve de lavage 2 ou chauffé à l'extérieur de la machine à laver la vaisselle 1 dans le cas où ladite machine 1 comprend une arrivée d'eau chaude d'un réseau.

On va décrire à présent un mode de réalisation de l'invention mis en oeuvre dans une machine à laver le linge.

Dans ce mode de réalisation de l'invention, les éléments analogues à ceux décrits en référence à la figure 1 portent les mêmes références et n'ont pas besoin d'être décrits à nouveau en détails ici.

L'énergie calorifique d'un bain de lavage est récupérée par ladite au moins une réserve d'un matériau à accumulation de chaleur 10 par la mise en contact du bain de lavage avec ladite au moins une réserve d'un matériau à accumulation de chaleur 10 logée à l'intérieur du réservoir 11.

Le bain de lavage est stocké temporairement à l'intérieur du réservoir 11 lors de l'étape de récupération d'énergie calorifique de sorte à créer un échange de chaleur entre ledit bain de lavage et ladite au moins une réserve d'un matériau à accumulation de chaleur 10.

Puis, le bain de lavage est évacué du réservoir 11 vers un réseau d'eau usée par l'ouverture de la vanne 14 puis au moyen de la pompe de vidange 8, où la pompe de circulation d'eau 6 est maintenue à l'arrêt.

L'énergie calorifique récupérée du bain de lavage est stockée dans ladite au moins une réserve d'un matériau à accumulation de chaleur 10 puis l'eau du bain de lavage est évacuée vers un réseau d'eau usée au plus tard avant l'étape de restitution d'énergie calorifique à un bain de rinçage. Le bain de rinçage est constitué par le remplissage en eau du réseau de la cuve de lavage 2. L'eau du réseau alimentée dans la machine à laver le linge est mise en contact avec ladite au moins une au moins une réserve d'un matériau à accumulation de chaleur 10 logée dans le réservoir 11 et cette eau du bain de rinçage capte l'énergie calorifique stockée par ladite au moins une réserve d'un matériau à accumulation de chaleur 10.

Puis, le bain de rinçage est réchauffé lors de son stockage dans le réservoir 11 puis est évacué du réservoir 11 vers la cuve de lavage 2 par l'ouverture de la vanne 14, où la pompe de circulation d'eau 6 est maintenue à l'arrêt.

Le bain de rinçage chauffé est stocké dans ladite au moins une réserve d'un matériau à accumulation de chaleur 10 jusqu'à une phase de lavage d'un cycle de fonctionnement suivant de la machine à laver le linge de sorte à être réutilisé par la machine à laver le linge.

Lors de la mise en oeuvre du cycle de fonctionnement suivant de la machine à laver le linge, l'eau contenue dans le réservoir 11 provenant d'un bain de rinçage d'un cycle de fonctionnement précédent est introduite dans la cuve de lavage 2 pour former au moins en partie un bain de lavage.

L'énergie calorifique stockée dans ladite au moins une réserve d'un matériau à accumulation de chaleur 10 et transférée au bain de rinçage d'un cycle de fonctionnement précédent contribue à diminuer l'apport thermique nécessaire pour chauffer l'eau d'un bain de lavage d'un cycle de fonctionnement suivant.

En outre, ce bain de lavage d'un cycle de fonctionnement suivant peut être chauffé par un moyen de chauffage présent dans la cuve de lavage 2 ou chauffé à l'extérieur de la machine à laver le linge dans le cas où ladite machine comprend une arrivée d'eau chaude d'un réseau.

Grâce à la présente invention, ladite au moins une réserve d'un matériau à accumulation de chaleur réalisée sous la forme d'une poche contenant un matériau à accumulation de chaleur et placée dans un réservoir couplé de manière fluidique avec la cuve de lavage permet de maximiser la surface d'échange de chaleur entre le matériau à accumulation de chaleur et ledit au moins un bain de lavage et/ou de rinçage de sorte à optimiser les échanges thermiques.

En outre, les phases d'échange de chaleur entre le matériau à accumulation de chaleur et lesdits au moins un premier et deuxième bain de lavage et/ou de rinçage sont raccourcies et d'efficacité améliorée tout en simplifiant la structure de l'appareil de lavage et l'industrialisation de celui-ci.

Bien entendu, de nombreuses modifications peuvent être apportées aux exemples de réalisation décrits précédemment sans sortir du cadre de l'invention.

Ainsi, l'appareil de lavage peut être une machine à laver le linge, une machine à laver et à sécher le linge, ou une machine à laver la vaisselle.

Et en particulier, l'ouverture d'alimentation en eau d'au moins un bain de lavage et/ou de rinçage peut être située en partie supérieure du réservoir comportant au moins une réserve d'un matériau à accumulation de chaleur.

Par ailleurs, le réservoir peut comporter plusieurs réserves de matériau à accumulation de chaleur réalisées chacune sous la forme d'une poche contenant un matériau à accumulation de chaleur de sorte à augmenter la surface d'échange de chaleur entre le matériau à accumulation de chaleur et lesdits au moins un premier et deuxième bain de lavage et/ou de rinçage.

Par ailleurs, lesdits au moins un premier et deuxième bain de lavage et/ou de rinçage utilisés pour récupérer et restituer l'énergie calorifique de l'eau contenue dans la cuve de lavage peuvent être constitués respectivement d'une partie ou de l'intégralité d'un ou plusieurs remplissage en eau du réseau de la cuve de lavage.

## Revendications

1. Appareil de lavage (1) comprenant une cuve de lavage (2), un échangeur de chaleur (9), ladite cuve de lavage (2) contenant au moins un bain de lavage et/ou de rinçage utilisé lors d'un cycle de fonctionnement dudit appareil de lavage (1), ledit échangeur de chaleur (9) comprenant au moins une réserve d'un matériau à accumulation de chaleur (10) captant l'énergie calorifique d'au moins un premier bain de lavage et/ou de rinçage et restituant ladite énergie calorifique captée à au moins un deuxième bain de lavage et/ou de rinçage, ledit appareil de lavage (1) comprenant un réservoir (11) en communication fluidique avec ladite cuve de lavage (2), ledit réservoir (11) comportant ladite au moins une réserve d'un matériau à accumulation de chaleur (10), et ladite au moins une réserve d'un matériau à accumulation de chaleur (10) logée à l'intérieur dudit réservoir (11) étant réalisée sous la forme d'une poche (12) contenant un matériau à accumulation de chaleur, **caractérisé en ce que** :
- lesdits au moins un premier et deuxième bain de liquide de lavage et/ou de rinçage sont mis en circulation successivement entre ladite cuve de lavage (2) et ledit réservoir (11) ; et
- lors du remplissage du réservoir (11) logeant ladite au moins une poche (12) contenant un matériau à accumulation de chaleur par lesdits au moins un premier et deuxième bain de liquide de lavage et/ou de rinçage, ladite au moins une poche (12) contenant un matériau à accumulation de chaleur est entourée par lesdits au moins un premier et deuxième bain de liquide de lavage et/ou de rinçage.

2. Appareil de lavage (1) selon la revendication 1, **caractérisé en ce que** ladite poche (12) contenant un matériau à accumulation de chaleur comprend deux parois extérieures raccordées ensemble, lesdites deux parois extérieures de ladite poche (12) contenant un matériau à accumulation de chaleur étant mises en contact avec lesdits au moins un premier et deuxième bain de liquide de lavage et/ou de rinçage.

3. Appareil de lavage (1) selon la revendication 1 ou 2, **caractérisé en ce que** ladite poche (12) contenant un matériau à accumulation de chaleur est réalisée dans un matériau souple formant une enveloppe avec le matériau à accumulation de chaleur contenu à l'intérieur de ladite poche (12).

4. Appareil de lavage (1) selon la revendication 1 ou 2, **caractérisé en ce que** ladite poche (12) contenant un matériau à accumulation de chaleur est rigide et préformée.

5. Appareil de lavage (1) selon l'une quelconque des revendications 1 à 4, **caractérisé en ce que** ledit matériau à accumulation de chaleur contenu dans ladite poche (12) est un matériau à changement de phase.

6. Procédé de commande en fonctionnement d'un appareil de lavage (1), ledit appareil de lavage (1) comprenant une cuve de lavage (2), un échangeur de chaleur (9), ladite cuve de lavage (2) contenant au moins un bain de lavage et/ou de rinçage utilisé lors d'un cycle de fonctionnement dudit appareil de lavage (1), ledit échangeur de chaleur (9) comprenant au moins une réserve d'un matériau à accumulation de chaleur (10) captant l'énergie calorifique d'au moins un premier bain de lavage et/ou de rinçage et restituant ladite énergie calorifique captée à au moins un deuxième bain de lavage et/ou de rinçage, ledit appareil de lavage (1) comprenant un réservoir (11) en communication fluidique avec ladite cuve de lavage (2), ledit réservoir (11) comportant ladite au moins une réserve d'un matériau à accumulation de chaleur (10), et ladite au moins une réserve d'un matériau à accumulation de chaleur (10) logée à l'intérieur dudit réservoir (11) étant réalisée sous la forme d'une poche (12) contenant un matériau à accumulation de chaleur, **caractérisé en ce que** ledit procédé comprend au moins les étapes suivantes :
- introduction successive desdits au moins un premier et deuxième bain de lavage et/ou de rinçage depuis ladite cuve de lavage (2) à l'intérieur d'un réservoir (11) comportant ladite au moins une réserve d'un matériau à accumulation de chaleur (10),
- où, lors du remplissage du réservoir (11) logeant ladite au moins une poche (12) contenant un matériau à accumulation de chaleur par lesdits au moins un premier et deuxième bain de liquide de lavage et/ou de rinçage, ladite au moins une poche (12) contenant un matériau à accumulation de chaleur est entourée par lesdits au moins un premier et deuxième bain de liquide de lavage et/ou de rinçage.

7. Procédé de commande en fonctionnement d'un appareil de lavage (1) selon la revendication 6, **caractérisé en ce que** ladite étape d'introduction dudit au moins un premier bain de lavage et/ou de rinçage depuis ladite cuve de lavage (2) à l'intérieur dudit réservoir (11) est suivie d'une étape de récupération de l'énergie calorifique dudit au moins un premier bain de lavage et/ou de rinçage par ladite poche (12) contenant un matériau à accumulation de chaleur.

8. Procédé de commande en fonctionnement d'un appareil de lavage (1) selon la revendication 7, **caractérisé en ce que** ladite étape de récupération de l'énergie calorifique dudit au moins un premier bain de lavage et/ou de rinçage est suivie d'une étape d'évacuation dudit au moins un premier bain de lavage et/ou de rinçage depuis ledit réservoir (11) vers ladite cuve de lavage (2) et/ou vers un réseau d'eau usée.

9. Procédé de commande en fonctionnement d'un appareil de lavage (1) selon la revendication 8, **caractérisé en ce qu'**une étape de conservation dudit au moins un premier bain de lavage et/ou de rinçage en contact avec ladite au moins une réserve d'un matériau à accumulation de chaleur (10) dans ledit réservoir (11) est mise en oeuvre entre ladite étape de récupération de l'énergie calorifique dudit au moins un premier bain de lavage et/ou de rinçage et ladite étape d'évacuation dudit au moins un premier bain de lavage et/ou de rinçage depuis ledit réservoir (11) vers ladite cuve de lavage (2) de sorte à réutiliser ledit au moins un premier bain de lavage et/ou de rinçage au cours d'un cycle de fonctionnement suivant mis en oeuvre par ledit appareil de lavage (1).

10. Procédé de commande en fonctionnement d'un appareil de lavage (1) selon l'une quelconque des revendications 6 à 9, **caractérisé en ce que** ladite étape d'introduction dudit au moins un deuxième bain de lavage et/ou de rinçage depuis ladite cuve de lavage (2) à l'intérieur dudit réservoir (11) est suivie d'une étape de restitution de ladite énergie calorifique captée par ladite poche (12) contenant un matériau à accumulation de chaleur.

11. Procédé de commande en fonctionnement d'un appareil de lavage (1) selon la revendication 10, **caractérisé en ce que** ladite étape de restitution de ladite énergie calorifique captée est suivie d'une étape d'évacuation dudit au moins un deuxième bain de lavage et/ou de rinçage depuis ledit réservoir (11) vers ladite cuve de lavage (2).

12. Procédé de commande en fonctionnement d'un appareil de lavage (1) selon la revendication 11, **caractérisé en ce qu'**une étape de conservation dudit au moins un deuxième bain de lavage et/ou de rinçage en contact avec ladite au moins une réserve d'un matériau à accumulation de chaleur (10) dans ledit réservoir (11) est mise en oeuvre entre ladite étape de restitution de ladite énergie calorifique captée et ladite étape d'évacuation dudit au moins un deuxième bain de lavage et/ou de rinçage depuis ledit réservoir (11) vers ladite cuve de lavage (2) de sorte à réutiliser ledit au moins un deuxième bain de lavage et/ou de rinçage au cours d'un cycle de fonctionnement suivant mis en oeuvre par ledit appareil de lavage (1).

13. Procédé de commande en fonctionnement d'un appareil de lavage (1) selon la revendication 7 ou 10, **caractérisé en ce que** l'au moins un des premier et deuxième bain de lavage et/ou de rinçage est stocké à l'intérieur dudit réservoir (11) respectivement lors des étapes de récupération d'énergie calorifique et de restitution de ladite énergie calorifique captée.

14. Procédé de commande en fonctionnement d'un appareil de lavage (1) selon la revendication 7 ou 10, **caractérisé en ce que** l'au moins un des premier et deuxième bain de lavage et/ou de rinçage est mis en circulation à l'intérieur dudit réservoir (11) respectivement lors des étapes de récupération d'énergie calorifique et de restitution de ladite énergie calorifique captée.

## Claims

1. A washing appliance (1) comprising a wash tub (2) and a heat exchanger (9), said wash tub (2) containing at least one washing and/or rinsing bath used during an operating cycle of said washing appliance (1), said heat exchanger (9) comprising at least one reserve of a heat-accumulating material (10) capturing the heat energy of at least one first washing and/or rinsing bath and returning said captured heat energy to at least one second washing and/or rinsing bath, said washing appliance (1) comprising a tank (11) in fluid communication with said wash tub (2), said tank (11) comprising said at least one reserve of a heat-accumulating material (10) and said at least one reserve of a heat-accumulating material (10) housed within said tank (11) being constructed in the form of a pouch (12) containing a heat-accumulating material, **characterized in that**:
- said at least one first and second washing liquid and/or rinsing liquid bath are successively circulated between said wash tub (2) and said tank (11); and
- when the tank (11) that houses said at least one pouch (12) containing a heat-accumulating material is being filled by said at least one first and second washing liquid and/or rinsing liquid bath, said at least one pouch (12) containing a heat-accumulating material is surrounded by said at least one first and second washing liquid and/or rinsing liquid bath.

2. A washing appliance (1) according to claim 1, **characterized in that** said pouch (12) containing a heat-accumulating material comprises two outside walls connected together, said two outside walls of said pouch (12) containing a heat-accumulating material being placed in contact with said at least one first and second washing liquid and/or rinsing liquid bath.

3. A washing appliance (1) according to claim 1 or 2, **characterized in that** said pouch (12) containing a heat-accumulating material is constructed from a flexible material forming an envelope with the heat-accumulating material contained within said pouch (12).

4. A washing appliance (1) according to claim 1 or 2, **characterized in that** said pouch (12) containing a heat-accumulating material is rigid and preformed.

5. A washing appliance (1) according to any one of the claims 1 to 4, **characterized in that** said heat-accumulating material contained within said pouch (12) is a phase-changing material.

6. A method for controlling the operation of a washing appliance (1), said washing appliance (1) comprising a wash tub (2) and a heat exchanger (9), said wash tub (2) containing at least one washing and/or rinsing bath used during an operating cycle of said washing appliance (1), said heat exchanger (9) comprising at least one reserve of a heat-accumulating material (10) capturing the heat energy of at least one first washing and/or rinsing bath and returning said captured heat energy to at least one second washing and/or rinsing bath, said washing appliance (1) comprising a tank (11) in fluid communication with said wash tub (2), said tank (11) comprising said at least one reserve of a heat-accumulating material (10), and said at least one reserve of a heat-accumulating material (10) housed within said tank (11) being constructed in the form of a pouch (12) containing a heat-accumulating material, **characterized in that** said method comprises at least the following steps:
- successively introducing said at least one first and second washing liquid and/or rinsing liquid bath from said wash tub (2) into a tank (11) comprising said at least one reserve of a heat-accumulating material (10),
- when the tank (11) that houses said at least one pouch (12) containing a heat-accumulating material is being filled by said at least one first and second washing liquid and/or rinsing liquid bath, said at least one pouch (12) containing a heat-accumulating material is surrounded by said at least one first and second washing liquid and/or rinsing liquid bath.

7. A method for controlling the operation of a washing appliance (1) according to claim 6, **characterized in that** said step of introducing at least one first and second washing and/or rinsing bath from said wash tub (2) into said tank (11) is followed by a step of retrieving heat energy from said at least one first washing and/or rinsing bath by said pouch (12) containing a heat-accumulating material.

8. A method for controlling the operation of a washing appliance (1) according to claim 7, **characterized in that** said step of retrieving heat from said at least one first washing and/or rinsing bath is followed by a step of discharging said at least one first washing and/or rinsing bath from said tank (11) to said wash tub (2) and/or to the wastewater network.

9. A method for controlling the operation of a washing appliance (1) according to claim 8, **characterized in that** a step of keeping said at least one first washing and/or rinsing bath in contact with said at least one reserve of a heat-accumulating material (10) within said tank (11) is implemented between said step of retrieving heat energy from said at least one first washing and/or rinsing bath and said step of discharging said at least one first washing and/or rinsing bath from said tank (11) to said wash tub (2), so as to reuse said at least one first washing and/or rinsing bath during a following operating cycle implemented by said washing appliance (1).

10. A method for controlling the operation of a washing appliance (1) according to any one of the claims 6 to 9, **characterized in that** said step of introducing said at least one second washing and/or rinsing bath from said wash tub (2) into said tank (11) is followed by a step of returning said heat energy captured by said pouch (12) containing a heat-accumulating material.

11. A method for controlling the operation of a washing appliance (1) according to claim 10, **characterized in that** said step of returning said captured heat energy is followed by a step of discharging said at least washing and/or rinsing bath from said tank (11) to said wash tub (2).

12. A method for controlling the operation of a washing appliance (1) according to claim 11, **characterized in that** a step of keeping said at least one second washing and/or rinsing bath in contact with said at least one reserve of a heat-accumulating material (10) within said tank (11) is implemented between said step of returning said captured heat energy and said step of discharging said at least one second washing and/or rinsing bath from said tank (11) to said wash tub (2), so as to reuse said at least one second washing and/or rinsing bath during a following operating cycle implemented by said washing appliance (1).

13. A method for controlling the operation of a washing appliance (1) according to claim 7 or 10, **characterized in that** at least one of the first and second washing and/or rinsing bath is stored within said tank (11) respectively during steps of retrieving heat energy and returning said captured heat energy.

14. A method for controlling the operation of a washing appliance (1) according to claim 7 or 10, **characterized in that** at least one of the first and second washing and/or rinsing bath is circulated within said tank (11) respectively during steps of retrieving heat energy and returning said captured heat energy.

## Patentansprüche

1. Waschgerät (1) mit einem Laugenbehälter (2), einem Wärmetauscher (9), wobei der besagte Laugenbehälter (2) mindestens eine während eines Betriebszyklus des besagten Waschgeräts (1) benutzte Wasch- und/oder Spülflotte enthält, wobei der besagte Wärmetauscher (9) mindestens einen Vorrat eines Wärmespeichermaterials (10), welches die Wärmeenergie mindestens einer ersten Wasch- und/oder Spülflotte aufnimmt und die besagte aufgenommene Wärmeenergie an mindestens eine zweite Wasch- und/oder Spülflotte abgibt, umfasst, wobei das besagte Waschgerät (1) einen Speicher (11) umfasst, welcher fluidisch mit dem besagten Laugenbehälter (2) verbunden ist, wobei der besagte Speicher (11) den besagten mindestens einen Vorrat eines Wärmespeichermaterials (10) enthält, und wobei der besagte mindestens eine innerhalb des besagten Speichers (11) vorhandene Vorrat eines Wärmespeichermaterials (10) in der Form eines Beutels (12), welcher ein Wärmespeichermaterial enthält, ausgeführt ist, **dadurch gekennzeichnet, dass**:
- das besagte mindestens eine erste und das besagte mindestens eine zweite Waschflüssigkeits- und/oder Spülflüssigkeitsbad zwischen dem besagten Laugenbehälter (2) und dem besagten Speicher (11) nacheinander umgewälzt werden; und
- während des Befüllens des Speichers (11), in welchem sich der besagte mindestens eine ein Wärmespeichermaterial enthaltende Beutel (12) befindet, mit dem besagten mindestens einem ersten und dem besagten mindestens einem zweiten Waschflüssigkeits- und/oder Spülflüssigkeitsbad, der besagte mindestens eine ein Wärmespeichermaterial enthaltende Beutel (12) von dem besagten mindestens einem ersten und dem besagten mindestens einem zweiten Waschflüssigkeits- und/oder Spülflüssigkeitsbad umgeben ist.

2. Waschgerät (1) nach Anspruch 1, **dadurch gekennzeichnet, dass** der besagte ein Wärmespeichermaterial enthaltende Beutel (12) zwei miteinander verbundene Außenwände aufweist, wobei die besagten zwei Außenwände des besagten ein Wärmespeichermaterial enthaltenden Beutels (12) mit dem besagten mindestens einem ersten und dem besagten mindestens einem zweiten Waschflüssigkeits- und/oder Spülflüssigkeitsbad in Kontakt gebracht werden.

3. Waschgerät (1) nach Anspruch 1 oder 2, **dadurch gekennzeichnet, dass** der besagte ein Wärmespeichermaterial enthaltende Beutel (12) aus einem flexiblen Material, welches eine Umhüllung bildet, gefertigt ist, wobei der besagte Beutel (12) das Wärmespeichermaterial enthält.

4. Waschgerät (1) nach Anspruch 1 oder 2, **dadurch gekennzeichnet, dass** der besagte ein Wärmespeichermaterial enthaltende Beutel (12) steif und vorgeformt ist.

5. Waschgerät (1) nach einem beliebigen der Ansprüche 1 bis 4, **dadurch gekennzeichnet, dass** das besagte in dem besagten Beutel (12) enthaltene Wärmespeichermaterial ein Phasenwechselmaterial ist.

6. Verfahren zur Betriebssteuerung eines Waschgeräts (1), wobei das besagte Waschgerät (1) einen Laugenbehälter (2), einen Wärmetauscher (9) umfasst, wobei der besagte Laugenbehälter (2) mindestens eine während eines Betriebszyklus des besagten Waschgeräts (1) benutzte Wasch- und/oder Spülflotte enthält, wobei der besagte Wärmetauscher (9) mindestens einen Vorrat eines Wärmespeichermaterials (10), welches die Wärmeenergie mindestens einer ersten Wasch- und/oder Spülflotte aufnimmt und die besagte aufgenommene Wärmeenergie an mindestens eine zweite Wasch- und/oder Spülflotte abgibt, umfasst, wobei das besagte Waschgerät (1) einen Speicher (11) umfasst, welcher fluidisch mit dem besagten Laugenbehälter (2) verbunden ist, wobei der besagte Speicher (11) den besagten mindestens einen Vorrat eines Wärmespeichermaterials (10) enthält, und wobei der besagte mindestens eine innerhalb des besagten Speichers (11) vorhandene Vorrat eines Wärmespeichermaterials (10) in der Form eines Beutels (12), welcher ein Wärmespeichermaterial enthält, ausgeführt ist, **dadurch gekennzeichnet, dass** das besagte Verfahren zumindest die folgenden Schritte umfasst:
- aufeinanderfolgendes Einführen der besagten mindestens einen ersten und der besagten mindestens einen zweiten Wasch- und/oder Spülflotte von dem besagten Laugenbehälter (2) in einen Speicher (11), welcher den besagten Vorrat eines Wärmespeichermaterials (10) enthält,
- wobei, während des Befüllens des Speichers (11), in welchem sich der besagte mindestens eine ein Wärmespeichermaterial enthaltende Beutel (12) befindet, mit dem besagten mindestens einem ersten und dem besagten mindestens einem zweiten Waschflüssigkeits- und/oder Spülflüssigkeitsbad, der besagte mindestens eine ein Wärmespeichermaterial enthaltende Beutel (12) von dem besagten mindestens einem ersten und dem besagten mindestens einem zweiten Waschflüssigkeits- und/oder Spülflüssigkeitsbad umgeben ist.

7. Verfahren zur Betriebssteuerung eines Waschgeräts (1) nach Anspruch 6, **dadurch gekennzeichnet, dass** auf den besagten Schritt des Einführens der besagten mindestens ersten Wasch- und/oder Spülflotte von dem besagten Laugenbehälter (2) in den besagten Speicher (11) ein Schritt der Rückgewinnung der Wärmeenergie der besagten mindestens ersten Wasch- und/oder Spülflotte durch den besagten ein Wärmespeichermaterial enthaltenden Beutel (12) folgt.

8. Verfahren zur Betriebssteuerung eines Waschgeräts (1) nach Anspruch 7, **dadurch gekennzeichnet, dass** auf den besagten Schritt der Rückgewinnung der Wärmeenergie der besagten mindestens ersten Wasch- und/oder Spülflotte ein Schritt des Ablassens der besagten mindestens ersten Wasch- und/oder Spülflotte aus dem besagten Speicher (11) in den besagten Laugenbehälter (2) und/oder in ein Abwassernetz folgt.

9. Verfahren zur Betriebssteuerung eines Waschgeräts (1) nach Anspruch 8, **dadurch gekennzeichnet, dass** ein Schritt des Zurückhaltens der besagten mindestens ersten Wasch-und/oder Spülflotte, welche mit dem besagten mindestens einen Vorrat eines Wärmespeichermaterials (10) in dem besagten Speicher (11) in Kontakt steht, zwischen dem besagten Schritt der Rückgewinnung der Wärmeenergie der besagten mindestens ersten Wasch- und/oder Spülflotte und dem besagten Schritt des Ablassens der besagten mindestens ersten Wasch- und/oder Spülflotte aus dem besagten Speicher (11) in den besagten Laugenbehälter (2) durchgeführt wird, um die besagte mindestens erste Wasch-und/oder Spülflotte während eines von dem besagten Waschgerät (1) durchgeführten anschließenden Betriebszyklus wiederzuverwenden.

10. Verfahren zur Betriebssteuerung eines Waschgeräts (1) nach einem beliebigen der Ansprüche 6 bis 9, **dadurch gekennzeichnet, dass** auf den besagten Schritt des Einführens der besagten mindestens zweiten Wasch- und/oder Spülflotte aus dem besagten Laugenbehälter (2) in den besagten Speicher (11) ein Schritt der Abgabe der besagten aufgenommenen Wärmeenergie durch den besagten das Wärmespeichermaterial enthaltenden Beutel (12) folgt.

11. Verfahren zur Betriebssteuerung eines Waschgeräts (1) nach Anspruch 10, **dadurch gekennzeichnet, dass** auf den besagten Schritt der Abgabe der besagten aufgenommenen Wärmeenergie ein Schritt des Ablassens der besagten mindestens einen zweiten Wasch-und/oder Spülflotte aus dem besagten Speicher (11) in den besagten Laugenbehälter (2) folgt.

12. Verfahren zur Betriebssteuerung eines Waschgeräts (1) nach Anspruch 11, **dadurch gekennzeichnet, dass** ein Schritt des Zurückhaltens der besagten mindestens zweiten Wasch- und/oder Spülflotte, welche mit dem besagten mindesten einen Vorrat eines Wärmespeichermaterials (10) in dem besagten Speicher (11) in Kontakt steht, zwischen dem besagten Schritt des Abgebens der besagten aufgenommenen Wärmeenergie und dem besagten Schritt des Ablassens der besagten mindestens zweiten Wasch- und/oder Spülflotte aus dem besagten Speicher (11) in den besagten Laugenbehälter (2) durchgeführt wird, um die besagte mindestens zweite Wasch- und/oder Spülflotte während eines von dem besagten Waschgerät (1) durchgeführten anschließenden Betriebszyklus wiederzuverwenden.

13. Verfahren zur Betriebssteuerung eines Waschgeräts (1) nach Anspruch 7 oder 10, **dadurch gekennzeichnet, dass** zumindest entweder die erste oder die zweite Wasch- und/oder Spülflotte jeweils während der Durchführung der Schritte des Rückgewinnens der Wärmeenergie und der Abgabe der besagten aufgenommenen Wärmeenergie in dem besagten Speicher (11) gespeichert wird.

14. Verfahren zur Betriebssteuerung eines Waschgeräts (1) nach Anspruch 7 oder 10, **dadurch gekennzeichnet, dass** zumindest entweder die erste oder die zweite Wasch- und/oder Spülflotte jeweils während der Durchführung der Schritte des Rückgewinnens der Wärmeenergie und der Abgabe der besagten aufgenommenen Wärmeenergie innerhalb des besagten Speichers (11) umgewälzt wird.
